# EUROPÄISCHE PATENTSCHRIFT

(11) **EP 4 052 004 B1**
(45) Veröffentlichungstag und Bekanntmachung des Hinweises auf die Patenterteilung: **02.04.2025**
(21) Anmeldenummer: 20797741.4
(22) Anmeldetag: 27.10.2020
(51) Int. Cl.: G01K 1/143, G01K 15/00

(54) **NICHT INVASIVES THERMOMETER**
NON-INVASIVE THERMOMETER
THERMOMÈTRE NON INVASIF

(30) Priorität: 31.10.2019 DE 102019129475
(43) Veröffentlichungstag der Anmeldung: 07.09.2022
(73) Patentinhaber: Endress+Hauser Wetzer GmbH+Co. KG, 87484 Nesselwang (DE)
(72) Erfinder: KOCH, Daniel, 87466 Oy-Mittelberg (DE); SCHALLES, Marc, 99097 Erfurt (DE); BRÜNDL, Harald, 85247 Schwabhausen (DE); WIEDEMANN, Stephan, 87544 Bihlerdorf (DE); WIEDEMANN, Peter, 87480 Weitnau (DE); ISELT, Torsten, 87435 Kempten (DE); PEUKER, Christian, 87509 Immenstadt (DE); VRDOLJAK, Pavo, 87484 Nesselwang (DE); KALLWEIT, Christian, 87700 Memmingen (DE); WOLF, Georg, 87616 Marktoberdorf (DE); MORNHINWEG, Markus, 86911 Dießen (DE); UMKEHRER, Alfred, 87659 Hopferau (DE)
(74) Vertreter: Endress + Hauser Group Services (Deutschland) AG+Co. KG
(86) Internationale Anmeldenummer: PCT/EP2020/080145
(87) Internationale Veröffentlichungsnummer: WO 2021/083871

(56) Entgegenhaltungen:
- EP-B1- 2 612 122
- DE-A1- 102014 119 593
- DE-A1- 102015 112 425
- DE-A1- 102017 100 267
- JP-A- 2012 088 171
- JP-U- S5 954 829
- US-A1- 2013 070 808

## Beschreibung

Die Erfindung betrifft eine Vorrichtung zur Bestimmung und/oder Überwachung einer Prozessgröße, insbesondere der Temperatur, des Durchflusses, oder der Strömungsgeschwindigkeit eines Mediums in einem Behältnis, beispielsweise in der Automatisierungstechnik. Bei dem Behältnis handelt es sich beispielsweise um einen Behälter oder um eine Rohrleitung.

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials oder eine davon abgeleitete Größe mit der Temperatur in Zusammenhang bringen, wie beispielsweise den elektrischen Widerstand bei Verwendung von Widerstandselementen oder den thermoelektrischen Effekt im Falle von Thermoelementen. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Bei einem Temperatursensor in Form eines Widerstandselements sind unter anderem sogenannte Dünnschicht- und Dickschicht-Sensoren sowie sogenannte Heißleiter (auch als NTC-Thermistoren bezeichnet) bekannt geworden. Bei einem Dünnschicht-Sensor, insbesondere einem Resistance Temperature Detector (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensoren in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung werden üblicherweise Thermoelemente nach DIN-Norm IEC584, z.B. Thermoelemente vom Typ K, J, N, S, R, B, T oder E, als Temperaturfühler eingesetzt. Aber auch andere Materialpaare, insbesondere solche mit einem messbaren Seebeck-Effekt, sind möglich.

Die Genauigkeit der Temperaturmessung hängt empfindlich von den jeweiligen thermischen Kontakten und der jeweils vorherrschenden Wärmeleitung ab. Die Wärmeströme zwischen dem Medium, dem Behältnis, in welchem sich das Medium befindet, dem Thermometer und der Prozessumgebung spielen hier eine entscheidende Rolle. Für eine zuverlässige Temperaturbestimmung ist es wichtig, dass der jeweilige Temperatursensor und das Medium sich zumindest für eine bestimmte Zeit, welche zur Erfassung der Temperatur erforderlich ist, im Wesentlichen im thermischen Gleichgewicht befinden. Die Zeit für eine Reaktion eines Thermometers auf eine Temperaturänderung wird auch als Ansprechzeit des Thermometers bezeichnet.

Eine hohe Messgenauigkeit lässt sich insbesondere dann erzielen, wenn der Temperatursensor in das jeweilige Medium eintaucht. So sind zahlreiche Thermometer bekannt geworden, bei denen der Temperatursensor mehr oder weniger direkt mit dem jeweiligen Medium in Kontakt gebracht wird. Auf diese Weise lässt sich eine vergleichsweise gute Kopplung zwischen dem Medium und dem Temperatursensor erzielen.

Für verschiedene Prozesse und für viele Behältnisse, insbesondere kleine Behälter oder Rohrleitungen, ist jedoch eine nicht-invasive Bestimmung der Temperatur vorteilhafter. So sind ebenfalls Thermometer bekannt geworden, die von außen/innen an dem jeweiligen Behältnis, in dem sich das Medium befindet, befestigt werden können. Solche Geräte, auch Oberflächenthermometer oder Anlegefühler genannt, sind beispielsweise aus Dokumenten wie der DE102014118206A1 oder DE102015113237A1 bekannt geworden. Bei derartigen Messgeräten sind die Temperatursensoren nicht in direktem Kontakt mit dem jeweiligen Prozess. Dies erfordert, dass zur Sicherstellung einer guten thermischen Kopplung verschiedene zusätzliche Aspekte berücksichtigt werden müssen. So ist beispielsweise der mechanische und damit auch der thermische Kontakt zwischen Behälter und Thermometer entscheidend für die erreichbare Messgenauigkeit. Bei unzureichendem Kontakt ist eine genaue Temperaturbestimmung nicht möglich.

Als Oberflächen- oder Hautpunktthermometer werden häufig Messeinsätze mit Temperatursensoren in Form von Thermoelementen verwendet, die direkt an die Außenfläche oder Haut des Rohres oder Behälters angeschweißt werden. In solchen Fällen kann der Austausch der Thermoelemente jedoch zu einem zeitaufwändigen und kostspieligen Prozess werden, insbesondere weil ein Austausch eine vorübergehende Abschaltung des Prozesses und/oder der Anwendung erfordern kann. Um diese Nachteile zu überwinden, sind beispielsweise aus der US5382093 oder der bisher unveröffentlichten europäischen Patentanmeldung mit dem Aktenzeichen 18198608.4 jeweils Ausgestaltungen entsprechender Thermometer bekannt geworden, die einen einfachen Austausch der Temperatursensoren ermöglichen.

Darüber hinaus sind zahlreiche, unterschiedliche Ausgestaltungen von Thermometern zur nicht invasiven Temperaturmessung bekannt geworden, wie beispielsweise in den Dokumenten US2013/070808A1, US2016/0047697A1, DE102005040699B3, EP3230704B1 oder EP2038625B1 beschrieben.

Eine zentrale Problematik bei der nicht-invasiven Temperaturbestimmung stellt die Wärmeableitung vom Prozess an die Umgebung dar. Diese sorgt für einen deutlich höheren Messfehler als im Falle einer direkten Einbringung des jeweiligen Temperatursensors in den Prozess.

Dieselbe Problematik ergibt sich beispielsweise auch für den Fall eines auf dem thermischen Messprinzips beruhenden Durchflussmessgeräts zur Bestimmung eines Durchflusses oder einer Strömungsgeschwindigkeit eines Mediums in einer Rohrleitung. Derartige Feldgeräte umfassen typischerweise zumindest zwei Sensorelemente mit zumindest einem Temperatursensor und zumindest einem Heizelement oder beheizbaren Temperatursensor. Die Sensorelemente können sowohl in die jeweilige Rohrleitung eingebracht werden, als auch in oder an ein Messrohr integriert werden (nicht-invasiver Aufbau).

Ausgehend von der beschriebenen Problematik der Wärmeableitung bei der nicht-invasiven Temperaturbestimmung liegt der Erfindung die Aufgabe zugrunde, eine Möglichkeit zur Temperaturbestimmung, insbesondere für Thermometer und Messgeräte zur Bestimmung eines Durchflusses oder einer Strömungsgeschwindigkeit, bereitzustellen, welche sich durch eine hohe Messgenauigkeit auszeichnet.

Diese Aufgabe wird gelöst durch die Vorrichtung zur Bestimmung und/oder Überwachung einer Prozessgröße, insbesondere der Temperatur, des Durchflusses oder der Strömungsgeschwindigkeit, eines Mediums in einem Behältnis nach Anspruch 1. Die erfindungsgemäße Vorrichtung umfasst einen Temperatursensor zur Erfassung der Temperatur, welcher Temperatursensor an einer äußeren Wandung des Behältnisses befestigbar ist, zumindest eine Anschlussleitung zur elektrischen Kontaktierung des Temperatursensors, und Befestigungsmittel zur, insbesondere lösbaren, Befestigung des Temperatursensors und eines dem Temperatursensor zugewandten Abschnitts der Anschlussleitung an der äußeren Wandung des Behältnisses. Dabei ist zumindest der Abschnitt der Anschlussleitung derart an der äußeren Wandung des Behältnisses befestigbar, dass der Abschnitt entlang der Wandung des Behältnisses verläuft und in thermischem Kontakt mit der Wandung des Behältnisses ist.

Der Temperatursensor sowie ein Abschnitt der Anschlussleitung sind demnach entlang der Wandung des Behältnisses, beispielsweise einer Rohrleitung, geführt und an derselben befestigt. Unter einer Ausrichtung des jeweiligen Abschnitts entlang der Wandung des Behältnisses sei einerseits ein zumindest teilweiser Verlauf des Abschnitts der Anschlussleitung im Wesentlichen parallel zu der Wandung, insbesondere parallel zu einer Längsachse der Wandung, verstanden. Es ist aber ebenso denkbar, dass der Abschnitt zumindest teilweise um die Wandung herumgewickelt, also dem Umfang der Rohrleitung folgend, angeordnet ist. Darüber hinaus sind auch zahlreiche andere Verläufe denkbar, beispielsweise eine mäanderartige Struktur der Anschlussleitung in dem Abschnitt. In jedem Fall folgt die zumindest eine Anschlussleitung in besagtem Abschnitt den Konturen der Wandung des Behältnisses.

Die Temperatur des Mediums wird demnach über eine Wandung des Behältnisses indirekt bestimmt. Durch die gewählte Ausrichtung der Anschlussleitung relativ zur Wandung des Behältnisses wird eine Kontaktfläche zwischen dem Temperatursensor, dem dem Temperatursensor zugewandten Abschnitt der Anschlussleitung und der Rohrleitung deutlich vergrößert. Auf diese Weise wird die Wärmeleitung von dem Medium über die Wandung des Behältnisses hin zu dem Temperatursensor und dem dem Temperatursensor zugewandten Abschnitt der Anschlussleitung deutlich erhöht. Zudem wird ein Temperaturgradient im dem dem Temperatursensor zugewandten Abschnitt der Anschlussleitung deutlich reduziert. Diese Effekte wiederum führen sämtlich zu einer verbesserten Messgenauigkeit.

Die Vermeidung von sogenannten Wärmeableitfehlern sind ein grundsätzliches Problem im Bereich der industriellen Temperaturbestimmung, unabhängig davon, ob jeweils ein Thermometer oder ein Durchflussmessgerät verwendet wird. Im Falle von invasiven Thermometern ist in diesem Zusammenhang vielfach von der sogenannten minimalen Eintauchtiefe in den jeweiligen Prozess die Rede, welche üblicherweise mindestens das Zehnfache des Thermometerdurchmessers betragen sollte. Bei einem beispielsweise durch die Verwendung eines Schutzrohr verschlechterten thermischen Kontakt sollte die minimale Eintauchtiefe sogar mehr als das Zehnfache des Thermometerdurchmessers betragen. Im Falle von Blockkalibratoren beträgt die minimale Eintauchtiefe üblicherweise das fünfzehnfache des Durchmessers des zur Kalibration verwendeten Referenzthermometers. Im Falle einer nicht-invasiven Temperaturbestimmung müssen dagegen, wie im Falle der vorliegenden Erfindung, andere Maßnahmen zur Gewährleistung einer homogenen Temperierung des jeweiligen Sensorelements ergriffen werden. Dies ist allerdings aufgrund des sehr inhomogenen Wärmeeintrags bei einer derartigen Messung deutlich komplexer als im Falle einer invasiven Temperaturbestimmung. Die parallele Ausrichtung der zumindest einen Anschlussleitung in einem vorgebbaren Abschnitt, welcher dem Temperatursensor zugewandt ist, stellt eine besonders effektive Maßnahme dar. Es ist anhand der vorliegenden Erfindung vorteilhaft denkbar, analog zur minimalen Eintauchtiefe für die invasive Temperaturbestimmung eine minimale Länge für den Abschnitt der Anschlussleitungen, welcher entlang der Rohrleitung verläuft, zu definieren, welche zu einer Minimierung von Wärmeableitfehlern führt.

Der Temperatursensor und der Abschnitt der zumindest einen Anschlussleitung können einerseits direkt auf die Rohrleitung aufgebracht werden. Es ist aber ebenfalls denkbar, dass der Temperatursensor und die Anschlussleitung Teil eines Messeinsatzes sind, und dass der Messeinsatz an der Rohrleitung befestigt wird.

Die Vorrichtung kann optional weiterhin über eine Elektronik verfügen. Alternativ kann die Elektronik auch eine separate, mit der Vorrichtung verbindbare, Komponente sein. Falls der Temperatursensor mittels mehr als einer Anschlussleitung kontaktiert ist, sind vorzugsweise die dem Temperatursensor zugewandten Abschnitte aller Anschlussleitungen parallel zur Rohrleitung ausgerichtet. In Bezug auf die Befestigungsmittel kommen alle dem Fachmann üblichen und geeigneten Befestigungsmittel, wie z.B. Klemmen oder Rohrschellen, in Betracht und fallen unter die vorliegende Erfindung.

Eine Ausgestaltung beinhaltet, dass es sich bei dem Temperatursensor um ein Widerstandselement oder um ein Thermoelement handelt.

Die Vorrichtung kann weiterhin auch mehr als einen Temperatursensor umfassen. Darüber hinaus kann die Vorrichtung auch über zumindest eine Einheit zum Heizen und/oder Kühlen aufweisen. Im Falle von mehreren Elementen - Sensoren, Heiz-/Kühlelemente oder weiteren Komponenten - können diese zumindest teilweise in einem gemeinsamen Messeinsatz angeordnet sein.

Eine weitere Ausgestaltung beinhaltet, dass die Vorrichtung zumindest ein Referenzelement zur in situ Kalibrierung und/oder Validierung zumindest des Temperatursensors umfasst, welches an der äußeren Wandung des Behältnisses befestigt ist, und welches Referenzelement zumindest teilweise aus zumindest einem Material besteht, für welches Material im zur Kalibrierung des ersten Temperatursensors relevanten Temperaturbereich zumindest ein Phasenübergang bei zumindest einer vorgegebenen Phasenübergangstemperatur auftritt, für welchen Phasenübergang das Material in der festen Phase verbleibt. In dieser Hinsicht sei auf die EP02612122B1 verwiesen, auf welche im Rahmen der vorliegenden Patentanmeldung vollumfänglich Bezug genommen wird.

In einer Ausgestaltung umfasst die Vorrichtung ein Heizelement, welches an der äußeren Wandung des Behältnisses befestigt ist. Mittels der Heizeinheit kann die Vorrichtung zudem auf eine vorgebbare Temperatur geheizt werden. Eine Ausgestaltung mit einem Heizelement ist insbesondere von Vorteil, wenn die Vorrichtung zur Bestimmung des Durchflusses gemäß dem thermischen Durchfluss-Messprinzip herangezogen wird. Unter den Begriff Durchfluss fallen im Rahmen der vorliegenden Erfindung sowohl ein Volumendurchfluss als auch ein Massendurchfluss des Mediums. Ebenso kann eine Durchflussgeschwindigkeit oder Durchflussrate des Mediums ermittelt werden.

Beispielsweise kann der Durchfluss auf zwei unterschiedliche Arten bestimmt werden. Gemäß einem ersten Messprinzip wird ein Sensorelement derart beheizt, dass seine Temperatur im Wesentlichen konstant bleibt. Bei bekannten, und zumindest zeitweise konstanten Mediumseigenschaften, wie der Mediumstemperatur, dessen Dichte oder auch Zusammensetzung, kann anhand der zum Halten der Temperatur auf den konstanten Wert notwendigen Heizleistung der Massedurchfluss des Mediums durch die Rohrleitung ermittelt werden. Unter der Mediumstemperatur sei dabei jene Temperatur verstanden, welche das Medium ohne einen zusätzlichen Wärmeeintrag eines Heizelements aufweist. Bei dem zweiten Messprinzip wird dagegen das Heizelement mit konstanter Heizleistung betrieben und die Temperatur des Mediums stromabwärts des Heizelements gemessen. In diesem Falle gibt die gemessene Temperatur des Mediums Aufschluss über den Massedurchfluss. Darüber hinaus sind aber auch noch andere Messprinzipien bekannt geworden, beispielsweise sogenannte transiente Verfahren, bei welchen die Heizleistung oder die Temperatur moduliert werden.

Das Heizelement kann beispielsweise in Form einer Widerstandsheizung ausgeführt sein, welche über die Umsetzung von ihnen zugeführter elektrischer Leistung, z. B. in Folge einer erhöhten Stromzufuhr, erwärmt werden.

In noch einer Ausgestaltung der Vorrichtung umfasst der Temperatursensor ein temperaturempfindliches Sensorelement, welches über zumindest eine erste und eine zweite Anschlussleitung elektrisch kontaktiert ist, wobei die erste Anschlussleitung in einen ersten und einen zweiten Abschnitt unterteilt ist, wobei der erste dem Sensorelement zugewandte Abschnitt aus einem ersten Material besteht, und wobei der zweite dem Sensorelement abgewandte Abschnitt aus einem zweiten sich von dem ersten unterscheidenden Material besteht, wobei die zweite Anschlussleitung aus dem zweiten Material besteht, und wobei der erste Abschnitt der ersten Anschlussleitung und zumindest ein Teil der zweiten Anschlussleitung einen ersten Differenz-Temperatursensor in Form eines Thermoelements bilden. In diesem Zusammenhang sei auf die bisher unveröffentlichte deutsche Patentanmeldung mit dem Aktenzeichen 102018116309.6 verwiesen, auf welche im Rahmen der vorliegenden Anmeldung vollumfänglich Bezug genommen wird. Mit einer derartigen Ausgestaltung des Temperatursensors ist es möglich, eine Wärmeableitung im Bereich des Temperatursensors erfassbar. Eine genaue Kenntnis der Wärmeableitung erhöht weiter die Messgenauigkeit der Vorrichtung. Im Falle der Bestimmung eines Durchflusses lassen sich mit abnehmender Wärmeableitung höhere Durchflussraten des Mediums in dem Behältnis detektieren, d.h. der Messbereich der Vorrichtung kann erweitert werden.

Erfindungsgemäß umfasst die Vorrichtung eine wärmeleitfähige Kopplungseinheit, welche an die äußere Wandung des Behältnisses anbringbar ist. Die Kopplungseinheit dient einer weiteren Verbesserung des thermischen Kontakts zwischen dem Temperatursensor, dem Abschnitt der Anschlussleitung und dem Medium bzw. der äußeren Wandung des Behältnisses.

Die Kopplungseinheit ist beispielsweise aus einem wärmeleitfähigen Material, insbesondere Kupfer oder Silber, gefertigt.

Erfindungsgemäß umfasst die Kopplungseinheit zumindest teilweise ein Material mit anisotroper Wärmeleitfähigkeit, vorzugsweise ein zumindest teilweise Kohlenstoff enthaltendes Material, insbesondere Graphit, oder hexagonales Bornitrid. In einer weiteren bevorzugten Ausgestaltung umfasst die Kopplungseinheit eine Schicht oder eine Beschichtung, welche Schicht oder Beschichtung zumindest teilweise aus dem Material mit anisotroper Wärmeleitfähigkeit besteht. Die Schicht weist bevorzugt in Längsrichtung, also entlang einer Ebene parallel zu der Schicht oder Beschichtung, eine größere Wärmeleitfähigkeit auf, als senkrecht dazu, bzw. senkrecht zu der Ebene. Hierdurch wird der Wärmestrom innerhalb des Sensorkopfes gezielt entlang der Kopplungseinheit umverteilt. In einer besonders bevorzugten Ausgestaltung umfasst die Kopplungseinheit eine dünnwandige Folie, welche Folie zumindest teilweise aus dem Material mit anisotroper Wärmeleitfähigkeit besteht. Die Folie weist ebenfalls bevorzugt entlang ihrer Längsachse eine höhere Wärmeleitfähigkeit auf, als senkrecht dazu.

Erfindungsgemäß ist die Kopplungseinheit derart angeordnet, dass sie zumindest den Temperatursensor, einen Teil des Abschnitts der Anschlussleitung und/oder einen Teilbereich des Behältnisses umgibt. Die Kopplungseinheit ist dabei vorzugsweise sowohl mit dem Behältnis als auch mit dem Temperatursensor und mit dem Abschnitt der Anschlussleitung in thermischen Kontakt. Sie dient der zusätzlichen Wärmeleitung vom Prozess zum Temperatursensor und verringert einen Temperaturgradienten im Bereich des Temperatursensors und des Abschnitts der Anschlussleitung.

Die Kopplungseinheit dient damit der gezielten Verteilung von Wärme aus dem Prozess zu den dem Prozess abgewandten Bereichen des Temperatursensors und des Abschnitts der Anschlussleitung. Darüber hinaus wird gewährleistet, dass sämtliche Komponenten der Vorrichtung stets im thermischen Gleichgewicht zueinander sind.

Es ist ferner von Vorteil, wenn die Kopplungseinheit dazu ausgestaltet ist, zu gewährleisten, dass zumindest der Temperatursensor und der Abschnitt der Anschlussleitung mit der Wandung des Behältnisses zu jedem Zeitpunkt im Wesentlichen im thermischen Gleichgewicht sind.

Erfindungsgemäß handelt es sich bei der Kopplungseinheit um ein längliches Element, welches im Vergleich zu einer Oberfläche eine geringe Dicke aufweist, beispielsweise eine dünnwandige Folie, oder eine Schichtanordnung aus zumindest zwei Folien.

In noch einer Ausgestaltung umfasst die Vorrichtung ein Gehäuse, welches an der äußeren Wandung des Behältnisses befestigbar ist und derart ausgestaltet ist, dass es im an der Wandung befestigten Zustand zumindest den Temperatursensor und den Abschnitt der Anschlussleitung umgibt.

Anhand der nachfolgenden Figuren wird die Erfindung näher erläutert. Es zeigt:
Fig. 1: ein Thermometer zur nicht invasiven Temperaturmessung nach Stand der Technik; und
Fig. 2: beispielhafte Ausgestaltungen für ein erfindungsgemäßes Thermometer.

In den Figuren sind gleiche Elemente jeweils mit demselben Bezugszeichen versehen. Die Ausgestaltungen aus den verschiedenen Figuren sind ferner beliebig miteinander kombinierbar.

Die nachfolgende Beschreibung bezieht sich ohne Beschränkung der Allgemeinheit auf Thermometer. Auf andere Arten von Feldgeräten, wie thermische Durchflussmessgeräte, lassen sich die jeweiligen Überlegungen ohne Weiteres übertragen.

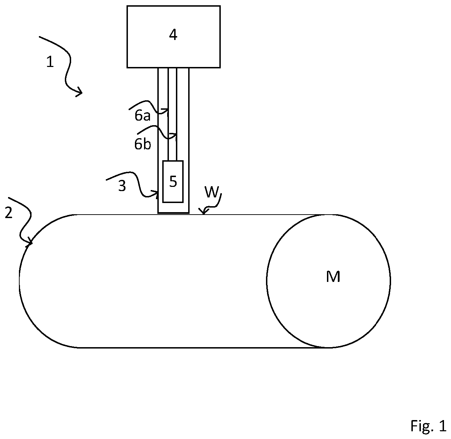

In Fig.1 ist eine schematische Abbildung eines Thermometers 1 gemäß Stand der Technik mit einem Messeinsatz 3 und einer Elektronik 4 gezeigt. Das Thermometer 1 dient der Erfassung der Temperatur T eines Mediums M, welches sich in einem Behältnis 2, hier in Form einer Rohrleitung, befindet. Zu diesem Zweck ragt das Thermometer 1 nicht in die Rohrleitung 2 hinein, sondern ist vielmehr zur nicht invasiven Temperaturbestimmung von außen auf eine Wandung W der Rohrleitung 2 aufgesetzt. Der Messeinsatz 3 umfasst einen Temperatursensor 5, welcher im vorliegenden Fall ein temperatursensitives Element in Form eines Widerstandselements umfasst. Der Temperatursensor 5 ist über die Anschlussleitungen 6a, 6b elektrisch kontaktiert und mit der Elektronik 4 verbunden. Während das gezeigte Thermometer 1 in kompakter Bauweise mit integrierter Elektronik 4 ausgeführt ist, kann bei anderen Thermometern 1 die Elektronik 4 auch separat von dem Messeinsatz 3 angeordnet sein. Auch muss es sich bei dem Temperatursensor 5 nicht notwendigerweise um ein Widerstandselement handeln und die Anzahl der verwendeten Anschlussleitungen 6 muss nicht notwendigerweise zwei betragen. Vielmehr kann die Anzahl der Anschlussleitungen 6 je nach angewendetem Messprinzip und verwendetem Temperatursensor 5 passend gewählt werden.

Wie bereits dargelegt, hängt die Messgenauigkeit eines solchen Thermometers 1 in hohem Maße von den jeweiligen für das Thermometer verwendeten Materialien und von den jeweiligen, insbesondere thermischen, Kontaktierungen, insbesondere im Bereich des Temperatursensors 5, ab. Der Temperatursensor 5 steht mittelbar, d.h. über den Messeinsatz 3 und über die Wandung W des Behältnisses 2, mit dem Medium M in thermischem Kontakt. Eine große Rolle spielt in diesem Zusammenhang auch eine Wärmeableitung vom Medium M an die Umgebung, welche für einen unerwünschten Temperaturgradienten im Bereich des Temperatursensors 5 führen kann.

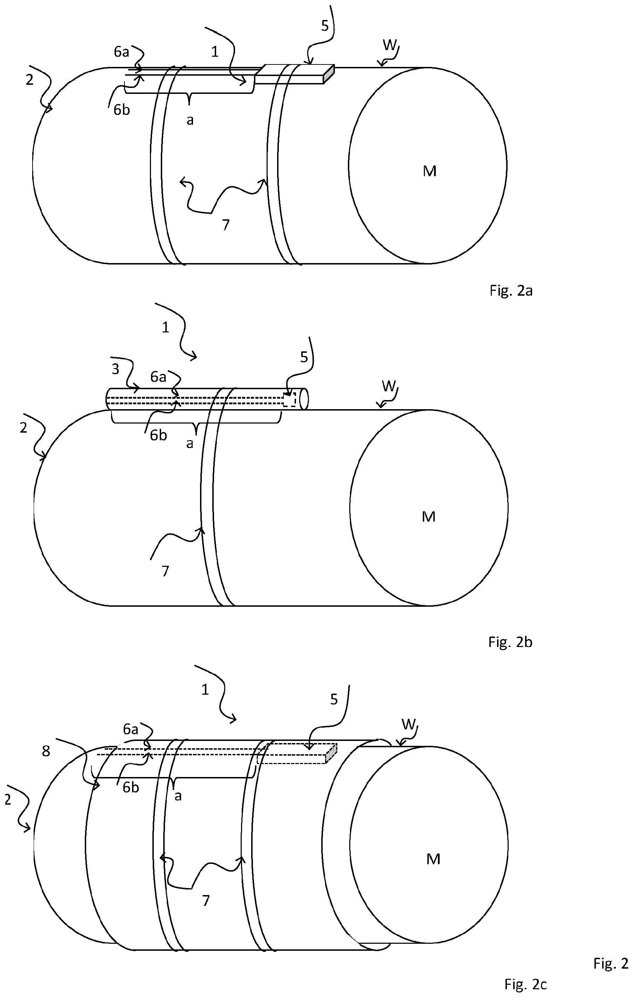

Um diesen Problematiken geeignet zu begegnen, wird im Rahmen der vorliegenden Erfindung eine alternative Ausgestaltung für ein nicht invasives Thermometer 1 vorgeschlagen, wie in Fig. 2 anhand einiger bevorzugter, beispielhafter Ausgestaltungen gezeigt.

Eine erste Ausgestaltung eines erfindungsgemäßen Thermometers 1 ist in Fig. 2a gezeigt. Das Thermometer 1 umfasst einen Temperatursensor 5, welcher über zwei Anschlussleitungen 6a und 6b elektrisch kontaktiert ist. Der Temperatursensor 5 ist an einer äußeren Wandung W des Behältnisses 2 angeordnet, und die Anschlussleitungen 6a und 6b verlaufen im Abschnitt a entlang der Rohrleitung 2, bzw. sind parallel zur Rohrleitung 2 ausgerichtet. Während die Anschlussleitungen 6a, 6b für die hier gezeigte Ausgestaltung geradlinig verlaufen, können sie in anderen Ausgestaltungen beispielsweise auch zumindest teilweise, oder auch mehrmals um das Behältnis 2 herum angeordnet sein. Auch in diesem Falle ist der Verlauf der Anschlussleitungen 6a,6b an die Kontur des jeweiligen Behältnisses 2 angepasst.

Es sei darauf verwiesen, dass eine erfindungsgemäße Vorrichtung 1 auch in Zusammenhang mit Behältern, Containern oder auch anderen Arten von Behältnissen 2 verwendet werden kann. Auch ist die vorliegende Erfindung keineswegs auf Ausgestaltungen mit zwei Anschlussleitungen 6a,6b beschränkt. Vielmehr können je nach Art des Temperatursensors 5 und je nach verwendetem Messprinzip unterschiedliche Anzahlen an Anschlussleitungen 6a, 6b erforderlich sein.

Neben dem Temperatursensor 5 kann die Vorrichtung 1 noch über weitere Komponenten verfügen, wie zum Beispiel ein Heizelement 9, ein Referenzelement 10 und/oder einen weiteren Temperatursensor 11. Diese Komponenten sind jedoch in Fig. 2 nicht eingezeichnet. Auch auf die Darstellung einer Elektronik 4 wird aus Gründen der Übersichtlichkeit für Fig. 2 verzichtet.

Der Temperatursensor 5 und zumindest der Abschnitt a der Anschlussleitungen 6a,6b können aber auch Teil eines Messeinsatzes 3 sein, wie in Fig. 2b dargestellt. Es können in anderen Ausgestaltungen aber auch mehrere Temperatursensoren 5, oder zusätzlich verwendete Heizelemente, Kühlelemente, oder Referenzelemente, in demselben Messeinsatz angeordnet sein.

In beiden Fällen umfasst die Vorrichtung 1 ferner Befestigungsmittel 7 zur Befestigung des Temperatursensors 5 und des dem Temperatursensor 5 zugewandten Abschnitts a der Anschlussleitungen 6a,6b an der Wandung W des Behältnisses 2. Diese Befestigungsmittel 7 sind für die gezeigten Ausgestaltungen in Form von Rohrschellen ausgestaltet. Es sei aber darauf verwiesen, dass auch alle anderen, geeigneten, aus dem Stand der Technik bekannten Befestigungsmittel 7 in Frage kommen und ebenfalls unter die vorliegende Erfindung fallen.

Im Fall der in Fig. 2c gezeigten Ausgestaltung umfasst die Vorrichtung 1 ferner eine wärmeleitfähige Kopplungseinheit 8, welche hier beispielhaft in Form einer dünnwandigen Folie ausgestaltet ist. Die Kopplungseinheit 8 ist um die Wandung W des Behältnisses 2 herum angeordnet und mittels der Befestigungsmittel 7 an der Wandung W des Behältnisses 2 befestigt. Dabei umgibt die Kopplungseinheit 7 den Temperatursensor 5 und den Abschnitt a der Anschlussleitungen 6a,6b.

Die Kopplungseinheit 8 erstreckt sich vorzugsweise zumindest entlang des Bereichs des zumindest einen Temperatursensors 5 und des Abschnitts a der Anschlussleitungen 6a,6b. Sie dient dazu, eine unerwünschte Wärmeableitung von dem jeweiligen Prozess, also von dem Medium M, an die Umgebung zu verringern bzw. zu verhindern. Es verringert insbesondere einen Temperaturgradienten im Bereich des Temperatursensors 5 und dem Abschnitt a der Anschlussleitungen 6a,6b.

Andere Ausgestaltungen können ferner ein Gehäuse 11 beinhalten, welches hier nicht dargestellt ist. Das Gehäuse 11 ist ebenfalls an der Wandung W des Behältnisses 2 befestigbar und umgibt den Temperatursensor 5, den Abschnitt a der Anschlussleitungen 6a,6b und. ggf. die Kopplungseinheit 8.

### Bezugszeichenliste

- 1: Vorrichtung
- 2: Behältnis
- 3: Messeinsatz
- 4: Elektronik
- 5: Temperatursensor
- 6: Anschlussdrähte
- 7: Befestigungsmittel
- 8: Kopplungseinheit
- 9: Heizelement
- 10: Referenzelement
- 11: Gehäuse

- M: Medium
- T: Temperatur
- W: Wandung des Behältnisses
- a: Abschnitt der Anschlussleitungen

## Patentansprüche

1. Vorrichtung (1) zur Bestimmung und/oder Überwachung einer Prozessgröße, insbesondere der Temperatur, des Durchflusses oder der Strömungsgeschwindigkeit, eines Mediums (M) in einem Behältnis (2) umfassend:
einen Temperatursensor (5) zur Erfassung der Temperatur, welcher Temperatursensor (5) an einer äußeren Wandung (W) des Behältnisses (2) befestigbar ist,
zumindest eine Anschlussleitung (6a,6b) zur elektrischen Kontaktierung des Temperatursensors (5), und
Befestigungsmittel (7) zur, insbesondere lösbaren, Befestigung des Temperatursensors (5) und eines dem Temperatursensor (5) zugewandten Abschnitts (a) der Anschlussleitung (6a,6b) an der äußeren Wandung (W) des Behältnisses (2),
wobei zumindest der Abschnitt (a) der Anschlussleitung (6a,6b) derart an der äußeren Wandung (W) des Behältnisses (2) befestigbar ist, dass der Abschnitt (a) entlang der Wandung (W) des Behältnisses (2) verläuft und in thermischem Kontakt mit der Wandung (W) des Behältnisses (2) ist
wobei die Vorrichtung eine wärmeleitfähige Kopplungseinheit (8) umfasst,
wobei es sich bei der Kopplungseinheit (8) um ein längliches Element, welches im Vergleich zu einer Oberfläche eine geringe Dicke aufweist, handelt,
wobei die Kopplungseinheit (8) derart an die äußere Wandung (W) des Behältnisses (2) anbringbar ist, dass die Kopplungseinheit (8) zumindest den Temperatursensor (5), einen Teil des Abschnitts (a) der Anschlussleitung (6a,6b) und einen Teilbereich des Behältnisses (2) umgibt
**dadurch gekennzeichnet, dass**
die Kopplungseinheit (8) zumindest teilweise ein Material mit anisotroper Wärmeleitfähigkeit umfasst, wobei die Kopplungseinheit (8) entlang ihrer Längsachse eine höhere Wärmeleitfähigkeit aufweist als senkrecht zu der Längsachse.

2. Vorrichtung (1) nach Anspruch 1,
wobei es sich bei dem Temperatursensor (5) um ein Widerstandselement oder um ein Thermoelement handelt.

3. Vorrichtung (1) nach Anspruch 1 oder 2,
umfassend zumindest ein Referenzelement (10) zur in situ Kalibrierung und/oder Validierung zumindest des Temperatursensors (5), welches an der äußeren Wandung (W) des Behältnisses befestigbar (2) ist, und welches Referenzelement (10) zumindest teilweise aus zumindest einem Material besteht, für welches Material im zur Kalibrierung des Temperatursensors (5) relevanten Temperaturbereich zumindest ein Phasenübergang bei zumindest einer vorgegebenen Phasenübergangstemperatur auftritt, für welchen Phasenübergang das Material in der festen Phase verbleibt.

4. Vorrichtung (1) nach zumindest einem der vorherigen Ansprüche, umfassend ein Heizelement (9), welches an der äußeren Wandung (W) des Behältnisses (2) befestigbar ist.

5. Vorrichtung (1) nach zumindest einem der vorherigen Ansprüche,
wobei der Temperatursensor (5) ein temperaturempfindliches Sensorelement, welches über zumindest eine erste und eine zweite Anschlussleitung elektrisch kontaktiert ist, umfasst,
wobei die erste Anschlussleitung in einen ersten und einen zweiten Abschnitt unterteilt ist,
wobei der erste dem Sensorelement zugewandte Abschnitt aus einem ersten Material besteht, und wobei der zweite dem Sensorelement abgewandte Abschnitt aus einem zweiten sich von dem ersten unterscheidenden Material besteht,
wobei die zweite Anschlussleitung aus dem zweiten Material besteht,
und wobei der erste Abschnitt der ersten Anschlussleitung und zumindest ein Teil der zweiten Anschlussleitung einen ersten Differenz-Temperatursensor in Form eines Thermoelements bilden.

6. Vorrichtung (1) nach zumindest einem der vorherigen Ansprüche,
wobei das Material mit anisotroper Wärmeleitfähigkeit der Kopplungseinheit (8) ein zumindest teilweise Kohlenstoff enthaltendes Material oder hexagonales Bornitrid, ist.

7. Vorrichtung (1) nach Anspruch 6,
wobei das Material mit anisotroper Wärmeleitfähigkeit der Kopplungseinheit (8) Graphit ist.

8. Vorrichtung (1) nach Anspruch 1, wobei die Kopplungseinheit (8) derart an die äußere Wandung (W) des Behältnisses (2) anbringbar ist, dass sie zumindest den Temperatursensor (5), einen Teil des Abschnitts (a) der Anschlussleitung (6a,6b) und einen Teilbereich des Behältnisses (2) derart umgibt,
- dass die Kopplungseinheit (8) sowohl mit dem Behältnis (2) als auch mit dem Temperatursensor (5) und mit dem Abschnitt (a) der Anschlussleitung (6a,6b) in thermischen Kontakt ist, und
- dass die Kopplungseinheit (8) einer gezielten Verteilung von Wärme aus dem Behältnis (2) zu einem dem-Behältnis (2) abzuwendenden Bereich des Temperatursensors (5) und zu dem Abschnitt (a) der Anschlussleitung (6a, 6b) dient.

9. Vorrichtung (1) nach zumindest einem der Ansprüche 1 bis 8,
wobei es sich bei der Kopplungseinheit (8) um eine dünnwandige Folie oder eine Schichtanordnung aus zumindest zwei Folien handelt.

10. Vorrichtung nach Anspruch 9, wobei die Folie zumindest teilweise aus dem Material mit anisotroper Wärmeleitfähigkeit besteht und wobei die Folie entlang ihrer Längsachse eine höhere Wärmeleitfähigkeit aufweist als senkrecht zu der Längsachse.

11. Vorrichtung (1) nach zumindest einem der vorherigen Ansprüche,
umfassend ein Gehäuse, welches an der äußeren Wandung (W) des Behältnisses (2) befestigbar ist und derart ausgestaltet ist, dass es im an der Wandung (W) befestigten Zustand zumindest den Temperatursensor (5) und den Abschnitt (a) der Anschlussleitung (6a,6b) umgibt.

## Claims

1. A device (1) for determining and/or monitoring a process variable, in particular the temperature, flow or flow velocity, of a medium (M) in a container (2) comprising: A temperature sensor (5) for detecting the temperature, it being possible to attach said temperature sensor (5) to an outer wall (W) of the container (2),
at least one connection cable (6a, 6b) for electrical connection of the temperature sensor (5), and
mounting materials (7) for attaching the temperature sensor (5) and a section (a) of the connection cable (6a, 6b) facing toward the temperature sensor (5) to the outer wall (W) of the container (2), in particular so that it can be removed again,
wherein at least the section (a) of the connection cable (6a, 6b) can be attached to the outer wall (W) of the container (2) in such a way that the section (a) extends along the wall (W) of the container (2) and is in thermal contact with the wall (W) of the container (2),
wherein the device comprises a thermally conductive coupling unit (8),
wherein the coupling unit (8) is an elongated element which is less thick than a surface,
wherein the coupling unit (8) can be attached to the outer wall (W) of the container (2) in such a way that the coupling unit (8) surrounds at least the temperature sensor (5), a part of the section (a) of the connection cable (6a, 6b), and a partial area of the container (2), **characterized in that**
the coupling unit (8) consists at least partially of a material with anisotropic thermal conductivity, wherein the coupling unit (8) has higher thermal conductivity along its longitudinal axis than perpendicular to the longitudinal axis.

2. The device (1) as claimed in claim 1,
wherein the temperature sensor (5) is a resistance element or a thermal element.

3. The device (1) as claimed in claim 1 or 2,
comprising at least one reference element (10) for the in situ calibration and/or validation of at least the temperature sensor (5), which can be attached to the outer wall (W) of the container (2), said reference element (10) consisting at least partially of at least one material, for which material at least one phase transition occurs at at least one specified phase transition temperature in the temperature range relevant for the calibration of the temperature sensor (5), for which phase transition the material remains in the solid phase.

4. The device (1) as claimed in at least one of the preceding claims,
comprising a heating element (9) which can be attached to the outer wall (W) of the container (2).

5. The device (1) as claimed in at least one of the preceding claims,
wherein the temperature sensor (5) comprises a temperature-sensitive sensor element which is electrically connected via at least one first and one second connection cable,
wherein the first connection cable is subdivided into a first and a second section,
wherein the first section facing toward the sensor element consists of a first material, and
wherein the second section facing away from the sensor element consists of a second material differing from the first,
wherein the second connection cable consists of the second material,
and wherein the first section of the first connection cable and at least a part of the second connection cable form a first temperature difference sensor in the form of a thermal element.

6. The device (1) as claimed in at least one of the preceding claims,
wherein the material with anisotropic thermal conductivity of the coupling unit (8) is a material containing at least some proportion of carbon, or is hexagonal boron nitride.

7. The device (1) as claimed in claim 6,
wherein the material with anisotropic thermal conductivity of the coupling unit (8) is graphite.

8. The device (1) as claimed in claim 1, wherein the coupling unit (8) can be attached to the outer wall (W) of the container (2) in such a way that it surrounds at least the temperature sensor (5), a part of the section (a) of the connection cable (6a, 6b), and a partial area of the container (2) in such a way
that the coupling unit (8) is in thermal contact with both the container (2), the temperature sensor (5), and the section (a) of the connection cable (6a, 6b), and
that the coupling unit (8) is used for the targeted distribution of heat from the container (2) to an area of the temperature sensor (5) facing away from the container (2) and to the area (a) of the connection cable (6a, 6b).

9. The device (1) as claimed in at least one of claims 1 to 8,
wherein the coupling unit (8) is a thin-walled film or a layered structure consisting of at least two films.

10. The device as claimed in claim 9, wherein the film at least partially consists of the material with anisotropic thermal conductivity, and wherein the film has higher thermal conductivity along its longitudinal axis than perpendicular to the longitudinal axis.

11. The device (1) as claimed in at least one of the preceding claims, comprising a housing which can be attached to the outer wall (W) of the container (2) and is configured in such a way that, when attached to the wall (W), it surrounds at least the temperature sensor (5) and the section (a) of the connection cable (6a, 6b).

## Revendications

1. Dispositif destiné à la détermination et/ou à la surveillance d'une grandeur process, notamment la température, le débit ou la vitesse d'écoulement d'un produit (M) dans un réservoir (2), lequel dispositif comprend :
un capteur de température (5) destiné à mesurer la température, lequel capteur de température (5) peut être fixé sur une paroi extérieure (W) du réservoir (2),
au moins un câble de raccordement (6a, 6b) pour la mise en contact électrique du capteur de température (5), et
des moyens de fixation (7) destinés à la fixation, notamment amovible, du capteur de température (5) et d'une section (a) du câble de raccordement (6a, 6b) tournée vers le capteur de température (5) sur la paroi extérieure (W) du réservoir (2),
au moins la section (a) du câble de raccordement (6a, 6b) pouvant être fixée à la paroi extérieure (W) du réservoir (2) de telle sorte que la section (a) s'étend le long de la paroi (W) du réservoir (2) et est en contact thermique avec la paroi (W) du réservoir (2),
le dispositif comprenant une unité de couplage (8) thermoconductrice,
l'unité de couplage (8) étant un élément allongé qui présente une faible épaisseur par rapport à une surface,
l'unité de couplage (8) pouvant être montée sur la paroi extérieure (W) du réservoir (2) de telle sorte que l'unité de couplage (8) entoure au moins le capteur de température (5), une partie de la section (a) du câble de raccordement (6a, 6b) et une zone partielle du réservoir (2),
**caractérisé en ce que**
l'unité de couplage (8) comprend au moins partiellement un matériau à conductivité thermique anisotrope, l'unité de couplage (8) présentant une conductivité thermique plus élevée le long de son axe longitudinal que perpendiculairement à l'axe longitudinal.

2. Dispositif (1) selon la revendication 1,
pour lequel le capteur de température (5) est un élément résistif ou un thermocouple.

3. Dispositif (1) selon la revendication 1 ou 2,
lequel dispositif comprend au moins un élément de référence (10) pour l'étalonnage et/ou la validation in situ d'au moins le capteur de température (5), lequel capteur peut être fixé (2) à la paroi extérieure (W) du réservoir, et lequel élément de référence (10) est constitué au moins partiellement d'au moins un matériau pour lequel, dans la gamme de température pertinente pour l'étalonnage du capteur de température (5), au moins une transition de phase se produit à au moins une température de transition de phase prédéterminée, transition de phase pour laquelle le matériau reste en phase solide.

4. Dispositif (1) selon au moins l'une des revendications précédentes,
lequel dispositif comprend un élément chauffant (9), lequel peut être fixé à la paroi extérieure (W) du réservoir (2).

5. Dispositif (1) selon au moins l'une des revendications précédentes,
pour lequel le capteur de température (5) comprend un élément capteur sensible à la température, lequel est mis en contact électrique via au moins un premier et un deuxième câble de raccordement,
le premier câble de raccordement étant divisé en une première et une deuxième section,
la première section tournée vers l'élément capteur étant constituée d'un premier matériau, et la deuxième section détournée de l'élément capteur étant constituée d'un deuxième matériau différent du premier,
le deuxième câble de raccordement étant constitué du deuxième matériau,
et la première section du premier câble de raccordement et au moins une partie du deuxième câble de raccordement formant un premier capteur de température différentiel sous la forme d'un thermocouple.

6. Dispositif (1) selon au moins l'une des revendications précédentes,
pour lequel le matériau à conductivité thermique anisotrope de l'unité de couplage (8) est un matériau contenant au moins partiellement du carbone ou un nitrure de bore hexagonal.

7. Dispositif (1) selon la revendication 6,
pour lequel le matériau à conductivité thermique anisotrope de l'unité de couplage (8) est le graphite.

8. Dispositif (1) selon la revendication 1, pour lequel l'unité de couplage (8) peut être montée sur la paroi extérieure (W) du réservoir (2) de manière à entourer au moins le capteur de température (5), une partie de la section (a) du câble de raccordement (6a, 6b) et une zone partielle du réservoir (2) de telle sorte
- que l'unité de couplage (8) est en contact thermique aussi bien avec le réservoir (2) qu'avec le capteur de température (5) et avec la section (a) du câble de raccordement (6a, 6b), et
- que l'unité de couplage (8) sert à une répartition ciblée de la chaleur du réservoir (2) vers une zone du capteur de température (5) à détourner du réservoir (2) et vers la section (a) du câble de raccordement (6a, 6b).

9. Dispositif (1) selon au moins l'une des revendications 1 à 8,
pour lequel l'unité de couplage (8) est un film à paroi mince ou un arrangement de couches constitué d'au moins deux films.

10. Dispositif (1) selon la revendication 9,
pour lequel le film est au moins partiellement constitué du matériau à conductivité thermique anisotrope et
pour lequel le film présente une conductivité thermique plus élevée le long de son axe longitudinal que perpendiculairement à l'axe longitudinal.

11. Dispositif (1) selon au moins l'une des revendications précédentes,
lequel dispositif comprend un boîtier pouvant être fixé sur la paroi extérieure (W) du réservoir (2) et lequel boîtier est conçu de telle sorte qu'à l'état fixé sur la paroi (W), il entoure au moins le capteur de température (5) et la section (a) du câble de raccordement (6a, 6b).
